# EUROPÄISCHE PATENTANMELDUNG

(11) **EP 1 345 017 A2**
(43) Veröffentlichungstag der Anmeldung: **17.09.2003**
(21) Anmeldenummer: 03004771.6
(22) Anmeldetag: 05.03.2003
(51) Int. Cl.: G01G 21/23, G01G 19/44

(54) **Waage**

(30) Priorität: 15.03.2002 DE 10211421
(71) Anmelder: Soehnle-Waagen GmbH & Co. KG, 71540 Murrhardt (DE)
(72) Erfinder: Gutzy, Klaus, 71540 Murrhardt (DE); Schurr, Michael, 71540 Murrhardt (DE); Stahl, Albrecht, 71560 Sulzbach / Murrhardt (DE); Kühnel,Wolfgang,Dr., 60488 Frankfurt am Main (DE)

(57) **Zusammenfassung**

Waage mit einer Grundplatte (1), einer Lastplatte (2) und zumindest einer zwischen beiden wirkenden Wägezelle (3), wobei die Grund- und die Lastplatte als plan verlaufende Platten ausgebildet sind.

## Beschreibung

Die Erfindung betrifft eine Waage gemäß dem Oberbegriff des Patentanspruchs 1.

Derartige Waagen, sei es eine Personenwaage, eine Küchenwaage oder eine Industriewaage bestehen in aller Regel im Wesentlichen aus einer Lastplatte, die sich unter Zwischenschaltung einer oder mehrerer Wägezellen auf einer Grundplatte beziehungsweise einem Grundrahmen abstützt. Die Wägezellen sind über eine Auswerteinheit verbunden, die das Ergebnis über ein Display sichtbar macht.

Nachteilig an dieser Ausführung ist, dass die Wägezellen auf der Grundplatte beziehungsweise in dem Gehäuse über Befestigungselemente gehalten sind und damit sehr wesentlich die Bauhöhe der Waage bestimmen. Dazu addieren sich noch die an der Grundplatte beziehungsweise dem Rahmen montierten Standfüße.

Aufgabe der Erfindung ist es, eine Waage zu schaffen, die mit einer geringen Bauhöhe auskommt, und bei der vor allem die Verbindung Lastplatte zur Grundplatte vereinfacht, das heißt, mit wenigen Bauteilen realisiert wird.

Diese Aufgabe wird mit den kennzeichnenden Merkmalen des Anspruchs 1 erfüllt. Die Ausbildung der Grund- und der Lastplatte als plan verlaufende Platten mit unmittelbar an diesen befestigten Wägezellen reduziert die mechanischen Bauteile auf ein Minimum.

Weitere Ausgestaltungen der Erfindung sind den Unteransprüchen zu entnehmen. Durch die Verwendung nur einer Biegebalkenwägezelle, als sogenannte Center Point-Wägezelle, wird der Aufbau der Waage weiter vereinfacht.

Eine besonders flache Bauweise wird dadurch erreicht, dass die Biegebalkenwägezelle über der Lastplatte angeordnet ist.

Die Ausbildung der Grundplatte als plane Platte hat weiter den Vorteil, dass keine Standfüße mehr erforderlich sind. Die Lastplatte als auch die Grundplatte können dabei aus den verschiedensten Materialien gefertigt werden. Diese reichen dabei von profilierten Blechstanzteile über Holzwerkstoffe, Stein und schließlich Glas.

Eine weitere Vereinfachung bringt die einstückige Ausführung der Befestigungsteller mit der Biegebalkenwägezelle. Im Umkehrschluss ist es aber auch möglich, die Befestigungsteller durch Profilierung der Last- und Grundplatte zu erreichen. Damit kann die Biegebalkenwägezelle besonders einfach ausgeführt werden.

Natürlich können bei der Wahl der Wägezelle (Center Point) beziehungsweise der Wägezellen alle Arten wie Planarwägezellen, Biegestab- beziehungsweise - balkenwägezellen, Plattformwägezellen zum Einsatz kommen.

Einige Ausführungsbeispiele der Erfindung werden im Folgenden anhand der Zeichnungen näher erläutert.

Es zeigen:
Fig. 1 eine perspektivische Ansicht einer Waage mit zwischen einer Grund- und einer Lastplatte angeordneten Wägezelle,
Fig. 2 eine Ansicht einer Waage mit einer Grund- und einer Lastplatte, wobei die Wägezelle über der Lastplatte angeordnet ist,
Fig. 3 ein Schnitt gemäß der Richtung III - III nach Fig. 1,
Fig. 4 ein Schnitt gemäß der Linie IV - IV nach Fig. 2,
Fig. 5 eine Altemativlösung gemäß einer Ansicht entsprechend Fig. 3 und
Fig. 6 eine weitere Alternativlösung gemäß einer Ansicht nach Fig. 3.

Zwischen einer Grundplatte 1 und einer Lastplatte 2 ist eine Wägezelle 3 (oder auch mehrere) angeordnet. Die Wägezelle 3 ist dabei als Doppelbiegebalkenwägezelle ausgebildet; sie hat einen unteren Lenker 4 und einen oberen Lenker 5, die die unteren Biegestellen 6 , 7 und die oberen Biegestellen 8, 9 bilden. An den Biegestellen sind nicht dargestellte Dehnungsmessstreifen appliziert, die über eine Auswerteinheit 10 mit der Anzeigeeinheit 11 in Verbindung stehen.

Die Wägezellen 3 sind hinter den Biegestellen 6 bis 9 beidseitig mit je einer Krafteinleitung 12, 12' versehen, wobei an der einen Krafteinleitung 12 ein mit der Grundplatte verbundener Befestigungsteller 13 und an der gegenüberliegenden Krafteinleitung 12' - die Wägezelle ist symmetrisch ausgebildet- ein Befestigungsteller 14 zur Verbindung mit der Lastplatte 2 angebracht ist.

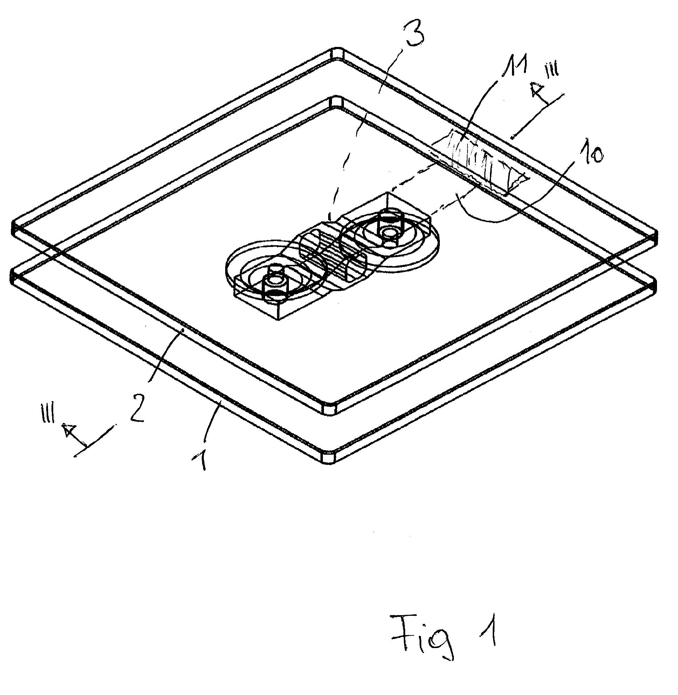

In Fig. 2 ist eine Alternativlösung dargestellt. Dabei ist auf der Grundplatte 1 der Befestigungsteller 13 über einen Befestigungshals 15, der durch eine Bohrung 16 die Lastplatte 2' durchdringt, mit der einen Krafteinleitung 12 der Wägezelle 3 verbunden. Die Wägezelle 3 entspricht in ihrem Aufbau der Wägezelle 3, wie sie in Fig. 3 dargestellt ist. An der zweiten Krafteinleitung 12' ist ebenfalls über eine Bohrung 17 ein Befestigungshals 15 durch die Lastplatte 2' geführt und diese auf einen Befestigungsteller 18 aufgelegt.

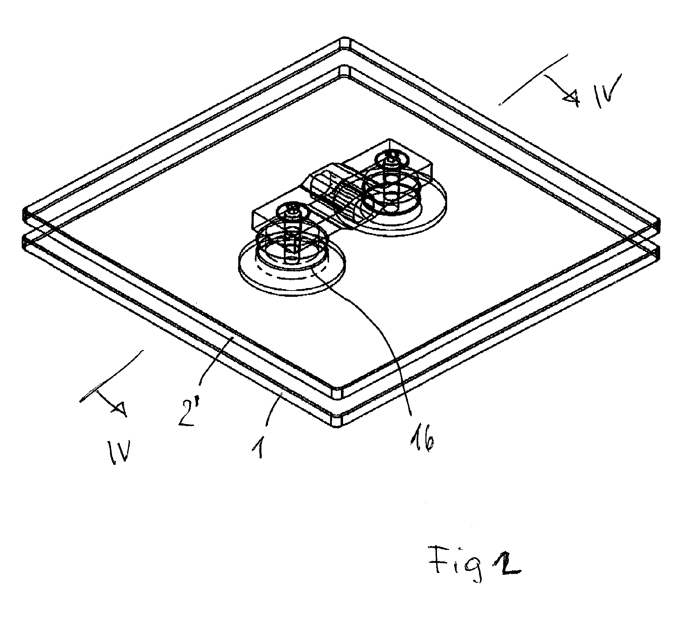

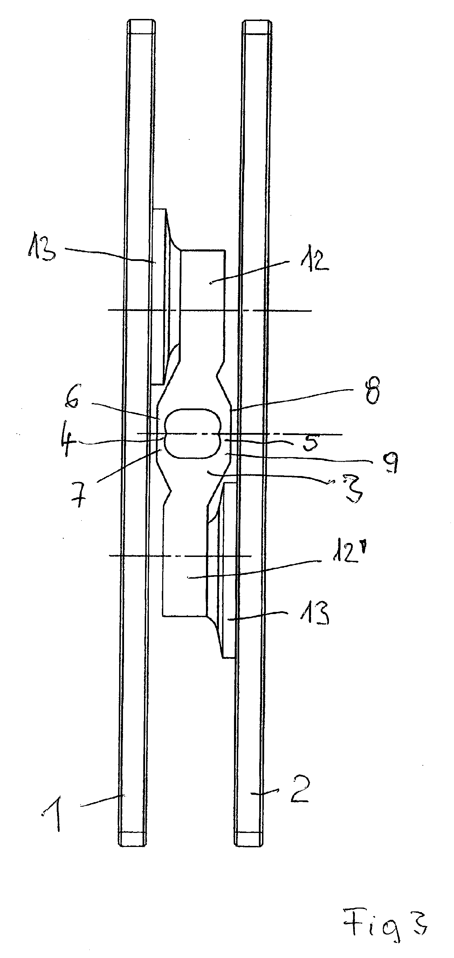

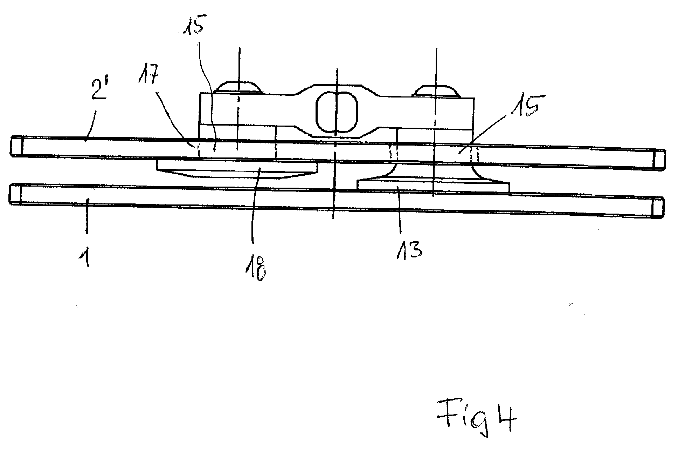

In Fig. 5 ist eine Wägezelle 3' dargestellt, die direkt mit der Grundplatte 1 und der Lastplatte 2 verbunden ist. Dazu ist sowohl an der Grund- als auch an der Lastplatte ein Distanzabsatz 19 vorgesehen. Dieser Distanzabsatz kann im einfachsten Ausführungsfall als Unterlagsscheibe ausgebildet sein, er kann aber auch, wenn die Last- und Grundplatte als Blechteil gestaltet ist, durch Verformung gebildet werden und er kann schließlich, falls die Grund- und Lastplatte als Glasplatte ausgebildet ist, direkt angeformt sein.

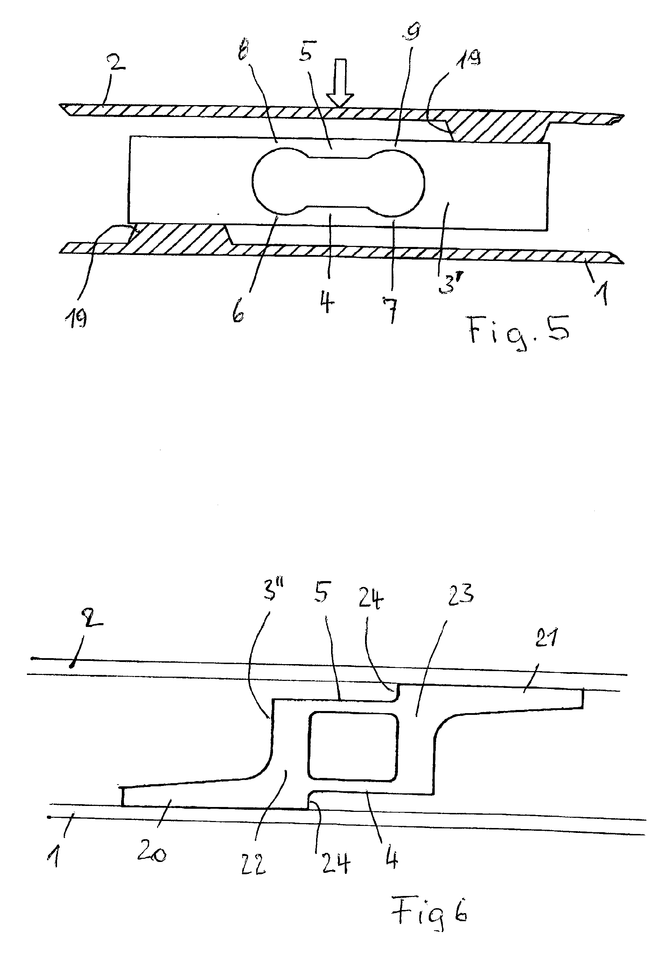

In Fig. 6 ist eine Wägezelle 3" dargestellt, bei der ein unterer Aufnahmearm 20 und ein oberer Aufnahmearm 21 an den Ecken 22 und 23 der Wägezelle 3" jeweils einen Absatz 24 bildend, angeformt sind, an die direkt die Lastplatte 2 und die Grundplatte 1 befestigt sind.

Natürlich können die beispielhaft dargestellten Elemente in den Ausführungsbeispielen auch, soweit zweckdienlich, untereinander kombiniert und abgewandelt eingesetzt werden.
- 1: Grundplatte
- 2: Lastplatte
- 2': Lastplatte
- 3: Wägezelle
- 3': Wägezelle
- 3": Wägezelle
- 4: Lenker unterer
- 5: oberen Lenker

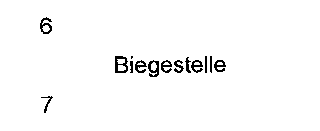

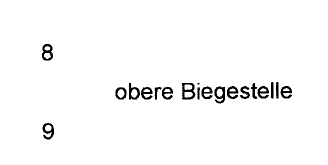

- 10: Auswerteinheit
- 11: Anzeigeeinheit
- 12: Aufnahmearm
- 13: Befestigungsteller
- 14: Befestigungsteller
- 15: Befestigungshals
- 16: Bohrung
- 17: Bohrung
- 18: Befestigungsteller
- 19: Absatz Distanzabsatz
- 20: untere Aufnehmer
- 21: obere Aufnehmer

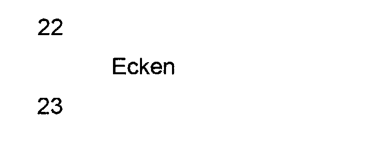

## Patentansprüche

1. Waage mit einer Grundplatte (1), einer Lastplatte (2) und zumindest einer zwischen beiden wirkenden Wägezelle (3), **dadurch gekennzeichnet, dass** die Grund- und die Lastplatte (1, 2) als plan verlaufende Platten ausgebildet sind, und dass die Wägezelle (3) beziehungsweise Wägezellen über beidseitige Befestigungsteller (13, 14) direkt mit den Platten kraftschlüssig verbunden ist beziehungsweise sind.

2. Waage nach Anspruch 1, **dadurch gekennzeichnet, dass** die Wägezelle als Biegebalkenwägezelle (3, 3', 3") ausgebildet ist beziehungsweise sind.

3. Waage nach Anspruch 1 oder 2, **dadurch gekennzeichnet, dass** die Befestigungsteller gleichseitig an der Biegebalkenwägezelle angeordnet sind, wobei ein Befestigungshals des einen Befestigungstellers die Lastplatte durch eine Bohrung durchdringt und die Biegebalkenwägezelle über der Lastplatte angeordnet ist. (Fig. 4)

4. Waage nach Anspruch 1 oder 2, **dadurch gekennzeichnet, dass** die Biegebalkenwägezelle (3) zwischen den Platten (1, 2) angeordnet ist, wobei die Befestigungsteller (14, 15) gegenseitig an der Biegebalkenwägezelle (3) vorgesehen sind.

5. Waage nach einem der Ansprüche 1 bis 4, **dadurch gekennzeichnet, dass** die Befestigungsteller einstückig mit der Biegebalkenwägezelle ausgeführt sind. (Fig. 5)

6. Waage nach einem der Ansprüche 3 bis 5, **dadurch gekennzeichnet, dass** die Befestigungsteller stufenförmig angeordnet sind. (Fig. 6)

7. Waage nach einem der Ansprüche 1 bis 6, **dadurch gekennzeichnet, dass** die Wägezelle (3) als Doppelbiegebalkenwägezelle ausgebildet ist beziehungsweise sind.
